# EUROPEAN PATENT APPLICATION

(11) **EP 3 144 501 A1**
(43) Date of publication of application: **22.03.2017**
(21) Application number: 16187000.1
(22) Date of filing: 02.09.2016
(51) Int. Cl.: F02C 7/045

(54) **SILENCER DUCT HAVING SILENCING ELEMENT EXTENDING THERETHROUGH**

(30) Priority: 16.09.2015 US 201514855901
(71) Applicant: General Electric Company, Schenectady, NY 12345 (US)
(72) Inventor: VENUGOPAL SETTY, Dinesh, 560066 Bangalore, Karnataka (IN); DAVIS, Dale Joel, Greenville, South Carolina 29615 (US); MERCHANT, Laxmikant, 560066 Karnataka (IN); PONYAVIN, Valery Ivanovich, Greenville, South Carolina 29615-4614 (US); ZHANG, Hua, Greenville, South Carolina 29615-4614 (US)
(74) Representative: Lee, Brenda

(57) **Abstract**

A silencer duct 102, 202 that may be part of, for example, a turbomachine inlet may include a duct body 104, 204. A first perforated wall 110, 210 extends within the duct body 104, 204 and substantially parallel to an interior surface 112, 212 of the duct body 104, 204. A first acoustic absorbing material may be positioned between the duct body 104, 204 and the first perforated wall 110, 210. A silencer element 130, 230 may extend axially through the duct body 104, 204, the silencer element 130, 230 including a second perforated wall 140, 240 having a second acoustic absorbing material 120, 150, 220, 250 adjacent thereto.

## Description

The disclosure relates generally to acoustic attenuation, and more particularly, to a silencer duct having a silencing duct body and a silencing element extending therethrough.

Noise reduction systems are used on a large variety of industrial machines such as turbomachines to reduce the acoustic impact to surrounding areas. In gas turbine systems, for example, noise reduction systems may be employed in the turbomachine inlet duct, gas turbine enclosures and barrier walls. Traditionally, to attain the necessary acoustic reduction requirements, silencer panels and acoustically treated walls are used in the noisy areas. One mechanism to reduce acoustic impact is to treat walls with acoustic absorbing material. Another mechanism is to place silencer panels in areas where noise reduction is required, such as a working fluid flow path in an intake system duct to prevent noise escaping.

With regard to ducts, each duct typically includes a frame having a number of silencer panels therein. Each panel typically includes an acoustic absorbing material such as mineral/glass wool positioned by a metal supporting member and surrounded by an enclosure including stainless steel perforated sheets on the sides thereof. The sheets are held together by stainless steel end caps. The stainless steel perforated sheets are typically welded to the supporting members that hold the acoustic absorbing material. The perforated stainless steel sheets hold the acoustic absorbing material intact with the supporting members and propagate the sound waves through the perforations into the acoustic absorbing material. The ducts are also typically made of a metal, such as steel or stainless steel. Use of steel for the ducts and silencer panel enclosures presents a number of challenges. For example, the enclosures are very heavy, and are also difficult and costly to manufacture due to the cost of the material and the need for welding to form the ducts and panels. In addition, the panels must be welded in place to the surrounding metal duct and must be custom fit for a particular sized duct. The frames created with the silencer panels are also typically very large in relative size, and in particular, length.

A first aspect of the disclosure provides a silencer duct, comprising: a duct body; a first perforated wall extending within the duct body and substantially parallel to an interior surface of the duct body; a first acoustic absorbing material positioned between the duct body and the first perforated wall; and a silencer element extending axially through the duct body, the silencer element including a second perforated wall having a second acoustic absorbing material adjacent thereto.

A second aspect of the disclosure provides a turbomachine inlet, comprising: an intake frame forming a working fluid flow, the intake frame operatively coupled to a compressor; and a silencer duct positioned within the intake frame, the silencer duct including: a duct body, a first perforated wall extending within the duct body and substantially parallel to an interior surface of the duct body, a first acoustic absorbing material positioned between the duct body and the first perforated wall, and a silencer element extending axially through the duct body, the silencer element including a second perforated wall having a second acoustic absorbing material adjacent thereto.

The illustrative aspects of the present disclosure are designed to solve the problems herein described and/or other problems not discussed.

Various features of this disclosure will be more readily understood from the following detailed description of the various aspects of the disclosure taken in conjunction with the accompanying drawings that depict various embodiments of the disclosure, in which:
FIG. 1 shows a schematic view of an illustrative industrial machine employing a silencer duct according to embodiments of the disclosure.
FIG. 2 shows a perspective view of a silencer duct according to embodiments of the disclosure.
FIGS. 3 and 4 show radial cross-sectional views of alternative embodiments of the silencer duct of FIG. 2.
FIG. 5 shows an axial cross-sectional view of an embodiments of the silencer duct of
FIG. 2.

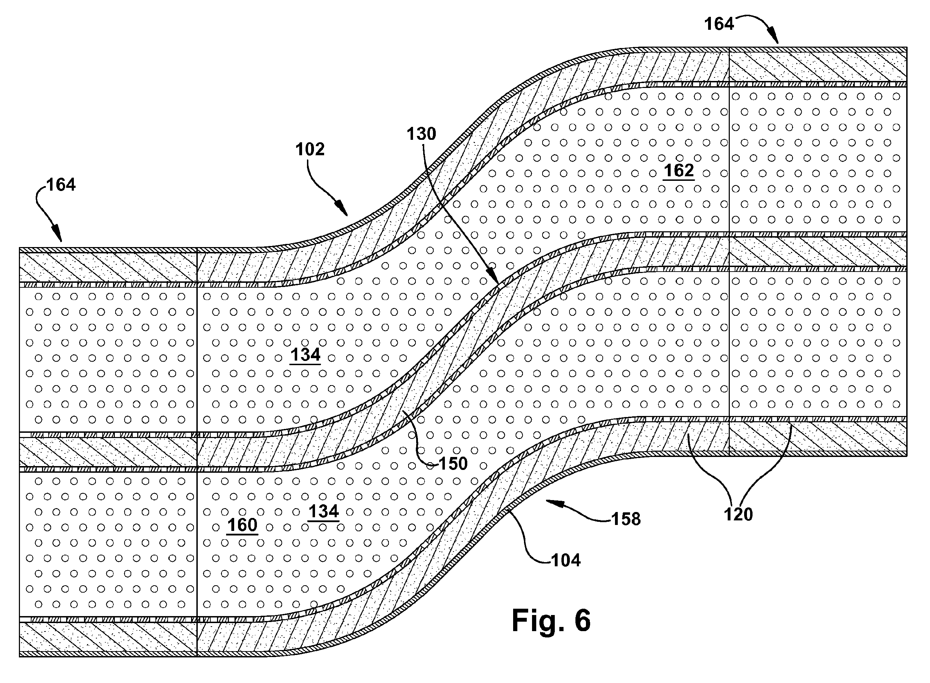

FIG. 6 shows an axial cross-sectional view of an alternative embodiments of the silencer duct according to embodiments of the disclosure.

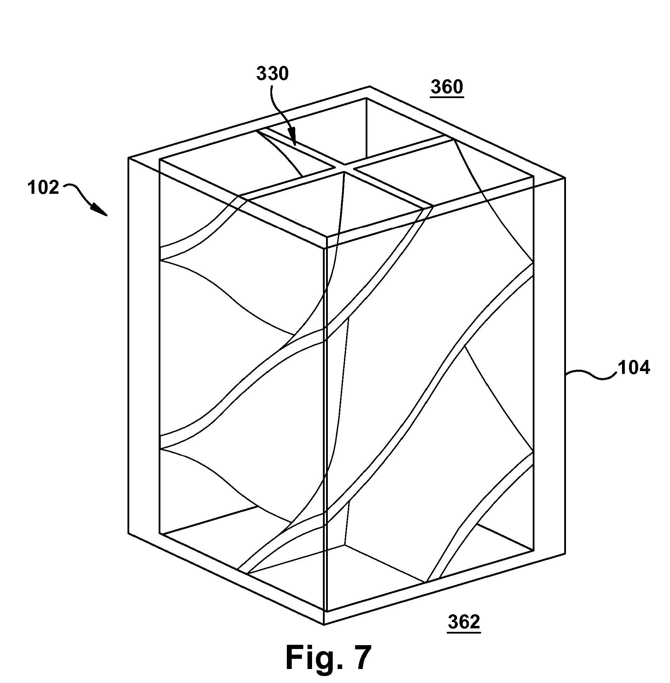

FIG. 7 shows a perspective view of an alternative embodiments of the silencer duct according to embodiments of the disclosure.

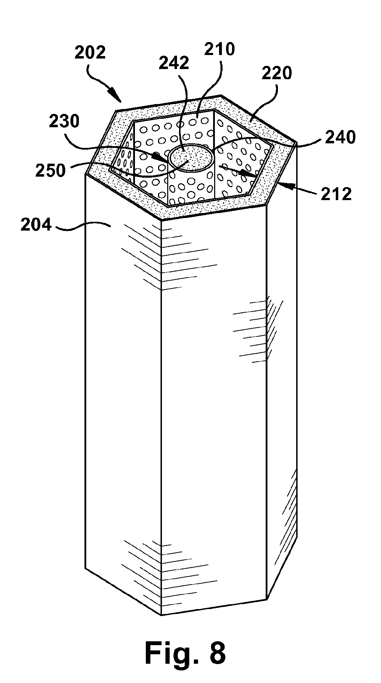

FIG. 8 shows a perspective view of a silencer duct according to another embodiment of the disclosure.

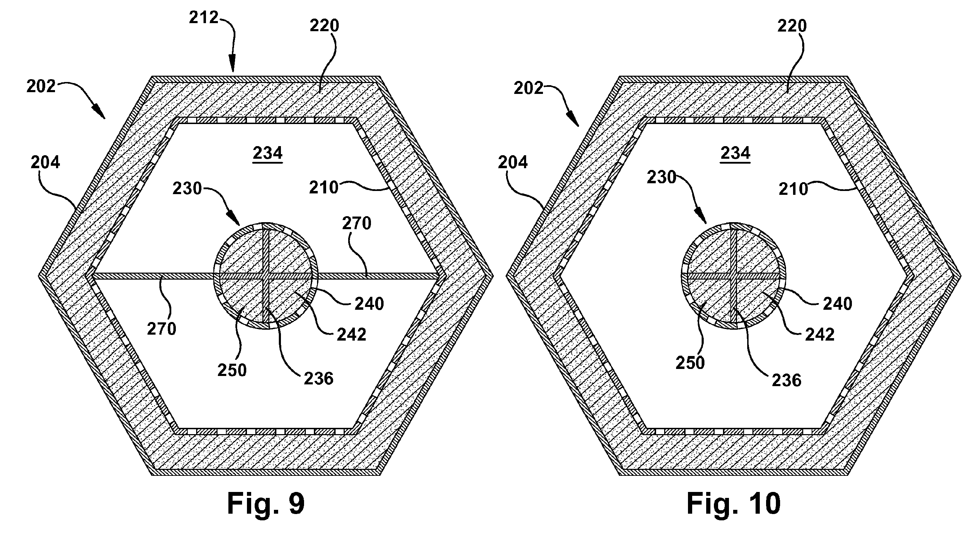

FIGS. 9 and 10 show radial cross-sectional views of alternative embodiments of the silencer duct of FIG. 8.

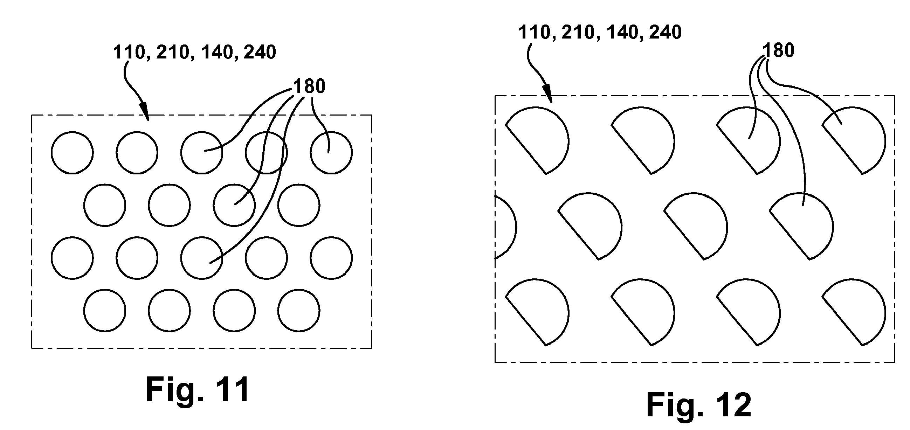

FIG. 11-13 show views of various forms of perforations for perforated walls of the silencer ducts according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

As indicated above, the disclosure provides a silencer duct and a turbomachine inlet including the silencer duct.

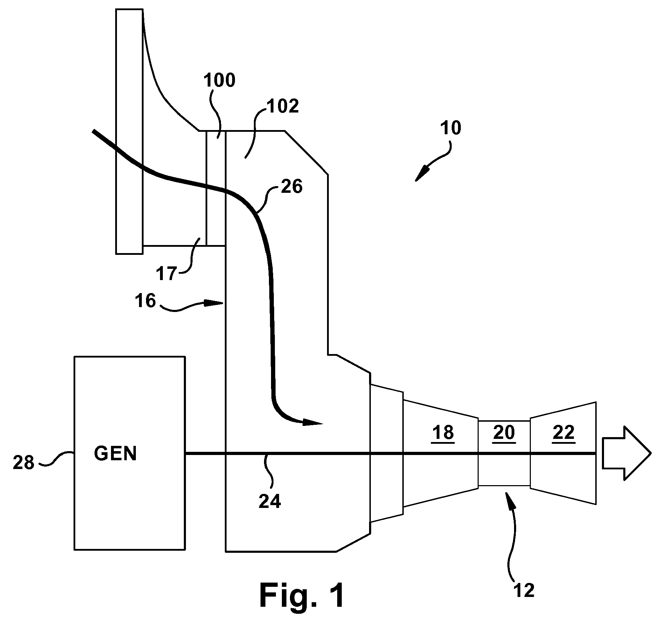

Referring to the drawings, FIG. 1 depicts an illustrative industrial machine in the form of a turbomachine 10 (e.g., simple cycle gas turbine power generation systems) that may include, among other things, a gas turbine system 12. Gas turbine system 12 may combust liquid or gas fuel, such as natural gas and/or a hydrogen-rich synthetic gas, to generate hot combustion gases to drive gas turbine system 12. Gas turbine system 12 includes an air intake section 16, a compressor 18, a combustor component 20, and a turbine component 22. Turbine component 22 is drivingly coupled to compressor 18 via a shaft 24. In operation, air (e.g., ambient air) enters gas turbine system 12 through a turbomachine inlet or air intake section 16 (indicated by arrow 26) and is pressurized in compressor component 18. Inlet 16 may include an intake frame 17 for forming a working fluid flow therein. As illustrated, intake frame 17 is operatively coupled to compressor 18, which includes at least one stage including a plurality of compressor blades coupled to shaft 24. Rotation of shaft 24 causes a corresponding rotation of the compressor blades, thereby drawing air into compressor 18 via inlet 16 and compressing the air prior to entry into combustor component 20.

Combustor component 20 may include one or more combustors. In embodiments, a plurality of combustors are disposed in combustor component 20 at multiple circumferential positions in a generally circular or annular configuration about shaft 24. As compressed air exits compressor component 18 and enters combustor component 20, the compressed air is mixed with fuel for combustion within the combustor(s). For example, the combustor(s) may include one or more fuel nozzles that are configured to inject a fuel-air mixture into the combustor(s) in a suitable ratio for combustion, emissions control, fuel consumption, power output, and so forth. Combustion of the fuel-air mixture generates hot pressurized exhaust gases, which may then be utilized to drive one or more turbine stages (each having a plurality of turbine blades) within the turbine component 22.

In operation, the combustion gases flowing into and through turbine component 22 flow against and between the turbine blades, thereby driving the turbine blades and, thus, shaft 24 into rotation. In turbine component 22, the energy of the combustion gases is converted into work, some of which is used to drive compressor component 18 through rotating shaft 24, with the remainder available for useful work to drive a load such as, but not limited to, an electrical generator 28 for producing electricity, and/or another turbine. It is emphasized that turbomachine 10 is simply illustrative of one application in which a silencer panel and system according to embodiments of the invention may be employed. As air flows through inlet 16, noise is created such that a silencer system 100 and compressor component 18 in which a silencer duct 102 according to embodiments of the invention is employed to reduce the noise.

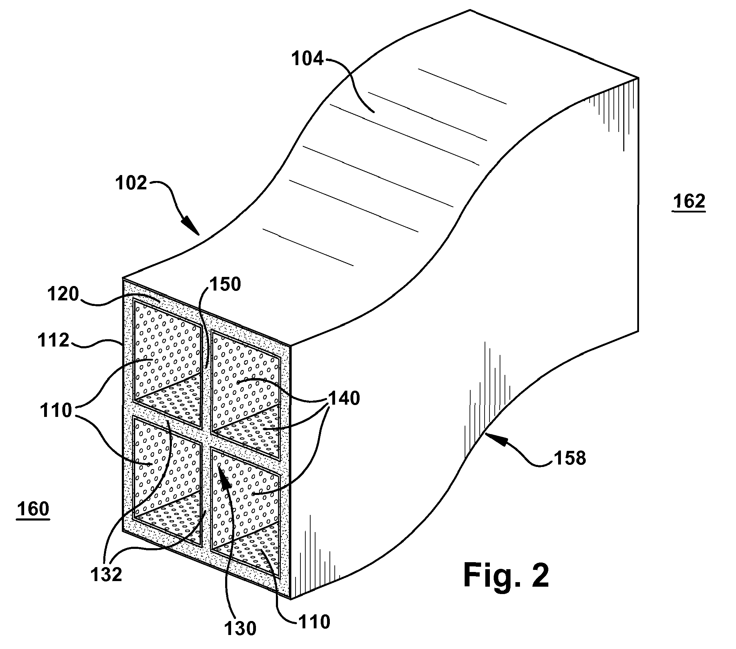

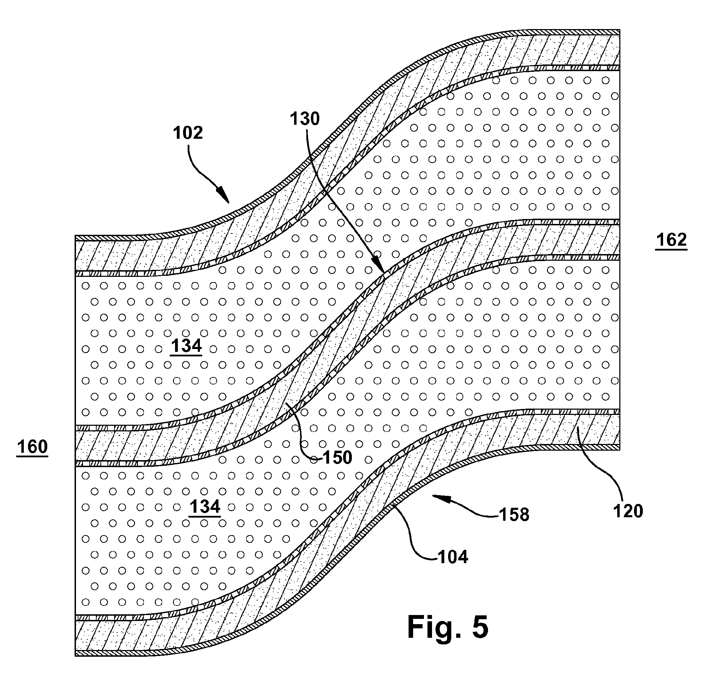

Referring to FIGS. 2-7 and 8-10, embodiments of a silencer duct 102, 202 according to the disclosure are illustrated. Silencer duct 102, 202 may include a duct body 104, 204. In embodiments illustrated, each duct body 104, 204 has a polygonal cross-section; however, such a cross-section may not be necessary in all instances. As will be described, each duct body 104, 204 has a length that is typically shorter than conventional silencer frames and/or panels. As illustrated in the example in FIGS. 2-6, duct body 104 has a substantially square cross-section, and in the example shown in FIGS. 8-10, duct body 204 has a substantially hexagonal cross-section. As used herein, "substantially" indicates having the stated characteristic for the most part, but perhaps with some small variances, e.g., for structural interconnection to other parts, accommodating adjacent structure, ease of manufacture, etc. Other polygonal cross-sections may also be employed such as but not limited to: triangular, pentagonal, octagonal, etc. Many parts of silencer duct 102, 202 made be made of a plastic, for example, polyvinyl chloride (PVC), polypropylene(PP), polypropylene co-polymer (PPC), polypropylene homo-polymer (PPH), polyethylene (PE), high density polyethylene (HDPE) or any other plastic capable of withstanding the environmental and operational characteristics of the particular frame and/or industrial machine in which the duct is employed. Silencer duct body 102, 202 may be formed by any now known or later developed fashion such as: injection molding, extrusion, or coupling of a number of parts, e.g., using fasteners, welding, etc.

As also shown in FIGS. 2 and 8, silencer duct 102, 202 may also include a first perforated wall 110, 210 extending within duct body 104, 204 and substantially parallel to an interior surface 112, 212, respectively, of the duct body. A first acoustic absorbing material 120, 220 may be positioned between duct body 104, 204 and first perforated wall 110, 210, respectively. Further, as will be described further herein, a silencer element 130, 230 may extend axially through duct body 104, 204, respectively. Each silencer element 130, 230 may extend an entirety or a portion of an axial length of duct body 104, 204. Each silencer element 130, 230 may include a second perforated wall 140, 240, respectively, having a second acoustic absorbing material 150, 250, respectively, adjacent thereto. Acoustic absorbing materials 120, 150, 220, 250 may include any now known or later developed sound absorbing material such as but not limited to at least one of: foam, mineral wool, rock wool and fiberglass. The foam may be reticulated, or otherwise called open cell foam. First acoustic absorbing material 120, 220 may be identical or different than second acoustic absorbing material 150, 250.

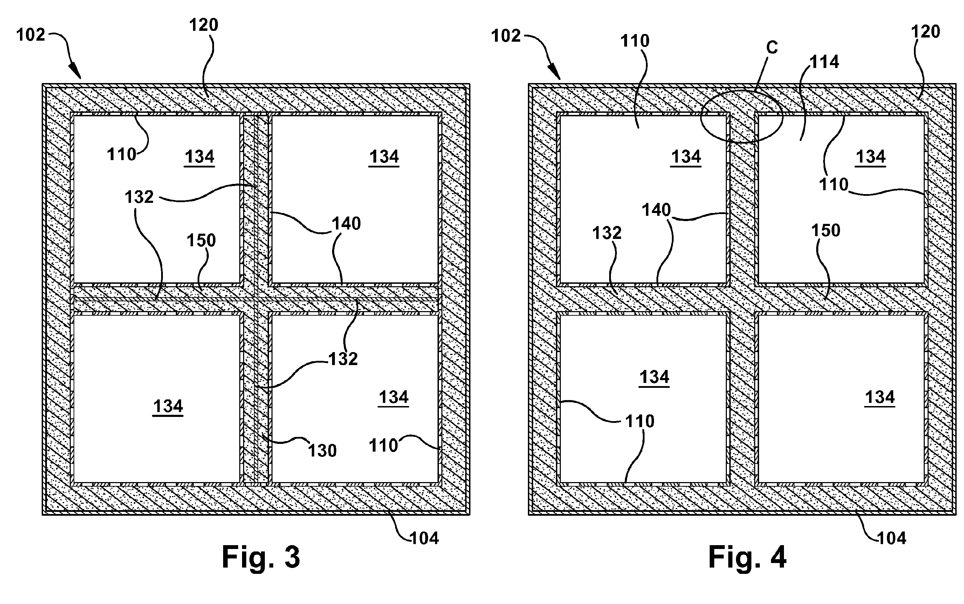

As shown in FIGS. 8-10, in one embodiment, first perforated wall 210 may take the form of an elongated hexagonal body having slightly smaller diameter compared to duct body 204. Here, a space 212 (FIG. 9) is created between duct body 204 and first perforated wall 210 in which first acoustic absorbing material 220 is positioned. Similar arrangements may be formed for duct bodies having different cross-sectional shapes. As shown in FIG. 3, with regard to first perforated wall 110 of duct body 104, in on embodiment, it may be formed in configured in a similar fashion as shown in FIGS. 8-10, i.e., as an elongated square body having slightly smaller diameter compared to duct body 104. Other arrangements may also be possible as described elsewhere herein. Each first perforated wall 110, 210 may be made of the same materials as duct body 104, 204, i.e., a plastic. In any event, first perforated wall 110, 210 and may be made as a unitary piece, e.g., as an injected molded or extruded part, or in parts coupled together, e.g., by fasteners and/or welds. In an alternative embodiment, wall 110, 210 may be made of a metal, e.g., steel, stainless steel, aluminum, etc.

As shown in FIGS. 2, 5 and 6, in one embodiment, silencer duct 102 may include a first, axially curved portion 158 curving from an upstream end 160 to a downstream end 162 thereof such that all of a working fluid flow passing therethough impinges at least a portion of an interior surface thereof. That is, a working fluid, e.g., air, flowing therethrough has no clear line of sight from end 160 to 162 and is therefore incapable of taking a linear path through silencer duct 130. In this fashion, all of a working fluid is exposed to acoustic absorption of first and/or second acoustic absorbing material 120, 150. In the embodiments shown, first portion 158 has been illustrated as an elongated S-shape; other shapes such as sinusoidal (e.g., 2 silencer ducts 102 coupled together) for preventing a linear path are also possible and considered within the scope of the disclosure.

As shown in FIG. 6, in an optional embodiment, silencer duct 102 may also include a second, axially linear portion 164 extending from at least one of downstream end 162 of first, axially curved portion 148 and upstream end 160 of first, axially curved portion 158. As shown, each linear portion 164 may include the same structure as the rest of silencer duct 102 (i.e., duct body, first partition wall, first acoustic absorbing material, silencer element, etc.) Alternatively, linear portion(s) 164 may be simplified. For example, linear portions 164 may include just duct body 104 with no acoustic absorption, or just duct body 104 with first perforated wall 110 and first acoustic absorbing material 120 with silencer element 130 omitted, or one or more portions of silencer element 130 omitted.

Referring to FIGS. 2-6 collectively, silencer element 130 may take the form of a septum that includes a plurality of partitioning portions 132 partitioning duct body 104 into at least two chambers or chamber ducts 134. In this embodiment, each partitioning portion 132 includes a pair of second perforated walls 140 having second acoustic absorbing material 150 positioned therebetween. Silencer element 130 can be formed in a large number of ways to form chambers 134 such that each of second perforated walls 140 couples to first perforated wall 110 (or duct body 104) in one of a number of ways. In one embodiment, shown in FIG. 3, first perforated wall 110 is in the form of a square cross-sectioned wall and silencer element 130 is "+ shaped", having parallel second perforated walls 140 with second acoustic absorbing material 150 therebetween. Here, silencer element 130 may be a separate element mounted within first perforated wall 110, e.g., by welding or fasteners. Alternatively, as shown in FIG. 4, silencer element 130 may be formed as four (4) square cross-sectioned chamber ducts 134 providing second perforated walls 150 and segments of first perforated wall 110. That is, in this example, first perforated wall 110 is formed by segments of partitioning portions 132 that are parallel to duct body 104 and are perforated walls - see break in wall at circle C.

Silencer element 130 can also be formed in a number of other shapes and/or with different segments. For example, element 130 may include: a T-shaped portion with an additional segment forming four chamber ducts, or with one single wall forming two chamber ducts 134, or as an X-shape forming four triangular chambers 134. Silencer element 130 can also be formed such that chambers 134 have other shapes and/or sizes. For example, element 130 may be formed with curved radially walls and/or chambers 134 can be made of uneven size. In addition, element 130 need not be formed with axially planar walls. For example, as shown in FIG. 7, a silencer element 330 may spiral within a linear duct body from an upstream end 360 to a downstream end 362 of duct body 104 such that all of a working fluid flow passing therethough impinges at least a portion of an interior surface thereof. Silencer element 130, 330 (FIG. 7), i.e., walls thereof, may be formed integrally with duct body 104 and/or first perforated wall 110, e.g., by injection molding, or may be mounted therein as a separate element.

Referring to FIGS. 8-10, in another embodiment, silencer element 230 may include second perforated wall 240 that has a hollow interior 242. In this case, second acoustic absorbing material 250 is positioned within hollow interior 242. In one embodiment, shown in FIG. 9, at least one support rib 270 (two shown) may extend from at least one of duct body 104 or first perforated wall 210 to support the second perforated wall. Support rib(s) 270 may be axially spaced elements or may be solid elements that divide the chamber into two chamber ducts 234 (see FIG. 9). Alternatively, as shown in FIG. 10, silencer element 230 may be supported at an axial end thereof in any now known or later developed fashion such that only one chamber 234 extends between first perforated wall 210 and second perforated wall 140. In the example shown, second perforated wall 240 has a substantially circular shape, i.e., creating a cylindrical wall; however, wall 240 may take a variety of alternative shapes such as hexagonal, square, etc.

Each second perforated wall 140, 240 may be made of the same materials as duct body 104, 204, i.e., a plastic. In any event, second perforated wall 140, 240 and may be made as a unitary piece, e.g., as an injected molded or extruded part, or in parts coupled together, e.g., by fasteners and/or welds. In an alternative embodiment, wall 140, 240 may be made of a plastic or a metal; in the latter case, e.g., steel, stainless steel, aluminum, etc.

In any of the described embodiments, the various silencer elements 130, 230, etc., may also optionally include an inner support 136, 236 to provide additional support and/or additional separation of acoustic absorbing chambers. For example, as shown only in the embodiments of FIG. 3, an inner support 136 may extend between pairs of second perforated walls 150 of at least one of the partitioning portions 132 to support silencer element 130. Inner support 136 may be made of any of the materials listed for perforated walls 110, 140, and may be secured in any fashion, e.g., by connection to duct body 104 or, where possible, to first perforated wall 110. Alternatively, as shown in FIGS. 9 and 10, an inner support 236 may be axially positioned within hollow interior 242. In one embodiment shown in FIG. 9, at least one of support ribs 270 (both as shown) may couple to inner support 236 for supporting silencer element 230. Inner support 236 may be made of any of the materials listed for perforated walls 110, 140, vinyl or lead.

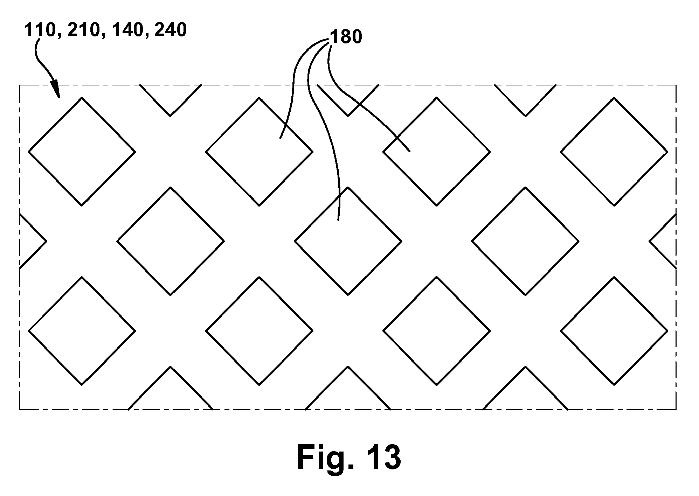

Referring to FIGS. 11-13, first perforated walls 110, 210 and second perforated walls 140, 240 each may include a planar sheet of material as listed herein having perforations 180 therein to allow noise to be absorbed by acoustic absorbing material 120, 150, 220, 250. As shown in FIG. 11, each perforation 180 may take the form of a hole extending through the wall. Alternatively, as shown in FIGS. 12 and 13, each perforation may include a different geometry of the openings (FIG. 12 and FIG. 13). Other shapes such as diamond, triangular, rectangular, etc. may also be possible.

Silencer duct 102, 202 provides a number of advantages over conventional frame with silencer panel configurations. For example, the irregular and streamlined flow paths created by polygon and/or S-shape geometries does not create much resistance to inlet air flow, but provides greater impact on the noise absorption, e.g., in a gas turbine during travel from compressor to outside, due to increased reactive impedance to the acoustical waves. As a result, silencer ducts according to embodiments of the disclosure can be provided in a shorter length compared to conventional systems. Further, due to their plastic materials, the silencer ducts have reduced weight and are easier to handle, have reduced cost, and are easier to fabricate using, e.g., injection molding techniques for at least part of the ducts. The ducts also eliminate extensive welding within conventional support panels and between support panels and supporting members. In addition, the plastic may provide slightly enhanced acoustic performance (e.g., a higher decibel (dB) attenuation of approximately, for example, 2 dB or above overall attenuation). In addition, plastic may allow increased perforation areal opening percentages compared to steel panels for the perforated walls.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following numbered clauses:
1. A silencer duct, comprising:
   a duct body;
   a first perforated wall extending within the duct body and substantially parallel to an interior surface of the duct body;
   a first acoustic absorbing material positioned between the duct body and the first perforated wall; and
   a silencer element extending axially through the duct body, the silencer element including a second perforated wall having a second acoustic absorbing material adjacent thereto.
2. The silencer duct of clause, wherein at least one of the first and second acoustic absorbing materials includes at least one of: foam, mineral wool, rock wool and fiberglass.
3. The silencer duct of any preceding clause, wherein at least one of the duct body, the first perforated wall and the second perforated wall is made of plastic.
4. The silencer duct of any preceding clause, wherein the second perforated wall has a hollow interior, and the second acoustic absorbing material is positioned within the hollow interior; and
   further comprising at least one support rib extending from at least one of the duct body and the first perforated wall to support the second perforated wall.
5. The silencer duct of any preceding clause, further comprising an inner support axially positioned within the hollow interior, and at least one of the plurality of support ribs couples to the inner support for supporting the silencer element.
6. The silencer duct of any preceding clause, wherein the duct body has a substantially hexagonal cross-section.
7. The silencer duct of any preceding clause, wherein the silencer element includes a septum including a plurality of partitioning portions partitioning the duct body into at least two chambers, each partitioning portion including a pair of the second perforated walls having the second acoustic absorbing material positioned therebetween; and
   further comprising an inner support extending between the pairs of the second perforated walls of at least one of the partitioning portions to support the silencer element.
8. The silencer duct of any preceding clause, wherein each of the second perforated walls couples to the first perforated wall.
9. The silencer duct of any preceding clause, wherein the silencer duct includes a first, axially curved portion curving from an upstream end to a downstream end thereof such that all of a working fluid flow passing therethough impinges at least a portion of an interior surface thereof.
10. The silencer duct of any preceding clause, wherein the first portion has an elongated S-shape.
11. The silencer duct of any preceding clause, further comprising a second, axially linear portion extending from at least one of the downstream end of the first, axially curved portion and the upstream end of the first, axially curved portion.
12. The silencer duct of any preceding clause, wherein the silencer element spirals from an upstream end to a downstream end of duct body such that all of a working fluid flow passing therethough impinges at least a portion of an interior surface thereof.
13. A turbomachine inlet, comprising:
   an intake frame forming a working fluid flow, the intake frame operatively coupled to a compressor; and
   a silencer duct positioned within the intake frame, the silencer duct including:
      a duct body,
      a first perforated wall extending within the duct body and substantially parallel to an interior surface of the duct body,
      a first acoustic absorbing material positioned between the duct body and the first perforated wall, and
      a silencer element extending axially through the duct body, the silencer element including a second perforated wall having a second acoustic absorbing material adjacent thereto.
14. The turbomachine inlet of any preceding clause, wherein at least one of the duct body, the first perforated wall and the second perforated wall is made of plastic.
15. The turbomachine inlet of any preceding clause, wherein the second perforated wall has a hollow interior, the second acoustic absorbing material is positioned within the hollow interior; and
   further comprising a plurality of support webs extending from the duct body to support the second perforated wall.
16. The turbomachine inlet of any preceding clause, further comprising an inner support axially positioned within the hollow interior, and at least one of the plurality of support webs couples to the inner support for supporting the silencer element.
17. The turbomachine inlet of any preceding clause, wherein the silencer element includes a septum including a plurality of partitioning portions partitioning the duct body into at least two chambers, each partitioning portion including a pair of the second perforated walls having the second acoustic absorbing material positioned therebetween; and
   further comprising an inner support extending between the pairs of the second perforated walls of at least one of the partitioning portions to support the silencer element.
18. The turbomachine inlet of any preceding clause, wherein the silencer duct includes a first, axially curved portion curving from an upstream end to a downstream end thereof such that all of a working fluid flow passing therethough impinges at least a portion of an interior surface thereof.
19. The turbomachine inlet of any preceding clause, further comprising a second, axially linear portion extending from at least one of the downstream end of the first, axially curved portion and the upstream end of the first, axially curved portion.
20. The turbomachine inlet of any preceding clause, wherein the silencer element spirals from an upstream end to a downstream end of duct body such that all of a working fluid flow passing therethough impinges at least a portion of an interior surface thereof.

## Claims

1. A silencer duct (102, 202), comprising:
a duct body (104, 204);
a first perforated wall (110, 210) extending within the duct body (104, 204) and substantially parallel to an interior surface (112, 212) of the duct body (104, 204);
a first acoustic absorbing material positioned between the duct body (104, 204) and the first perforated wall (110, 210); and
a silencer element (130, 230) extending axially through the duct body (104, 204), the silencer element (130, 230) including a second perforated wall (140, 240) having a second acoustic absorbing material (120, 150, 220, 250) adjacent thereto.

2. The silencer duct (102, 202) of claim 1, wherein at least one of the first and second acoustic absorbing materials (120, 150, 220, 250) includes at least one of: foam, mineral wool, rock wool and fiberglass.

3. The silencer duct (102, 202) of any preceding claim, wherein at least one of the duct body (104, 204), the first perforated wall (110, 210) and the second perforated wall (140, 240) is made of plastic.

4. The silencer duct (102, 202) of any preceding claim, wherein the second perforated wall (140, 240) has a hollow interior, and the second acoustic absorbing material (120, 150, 220, 250) is positioned within the hollow interior; and
further comprising at least one support rib extending from at least one of the duct body (104, 204) and the first perforated wall (110, 210) to support the second perforated wall (140, 240).

5. The silencer duct (102, 202) of claim 4, further comprising an inner support (136, 236) axially positioned within the hollow interior, and at least one of the plurality of support ribs couples to the inner support (136, 236) for supporting the

6. The silencer duct (102, 202) of any preceding claim, wherein the duct body (104, 204) has a substantially hexagonal cross-section.

7. The silencer duct (102, 202) of any preceding claim, wherein the silencer element (130, 230) includes a septum including a plurality of partitioning portions (132) partitioning the duct body (104, 204) into at least two chambers, each partitioning portion including a pair of the second perforated walls (140, 240) having the second acoustic absorbing material (120, 150, 220, 250) positioned therebetween; and
further comprising an inner support (136, 236) extending between the pairs of the second perforated walls (140, 240) of at least one of the partitioning portions (132) to support the silencer element (130, 230).

8. The silencer duct (102, 202) of claim 7, wherein each of the second perforated walls (140, 240) couples to the first perforated wall (110, 210).

9. The silencer duct (102, 202) of claim 7 or claim 8, wherein the silencer duct (102, 202) includes a first, axially curved portion (158) curving from an upstream end (160) to a downstream end thereof such that all of a working fluid flow passing therethough impinges at least a portion of an interior surface (112, 212) thereof.

10. The silencer duct (102, 202) of claim 9, wherein the first portion (158) has an elongated S-shape.
